# EUROPÄISCHE PATENTSCHRIFT

(11) **EP 2 059 713 B1**
(45) Veröffentlichungstag und Bekanntmachung des Hinweises auf die Patenterteilung: **07.04.2010**
(21) Anmeldenummer: 07801608.6
(22) Anmeldetag: 10.08.2007
(51) Int. Cl.: F16M 11/20, F16M 11/00, A47B 19/00

(54) **STATIV**
STAND
STATIF

(30) Priorität: 06.09.2006 DE 202006013678 U
(43) Veröffentlichungstag der Anmeldung: 20.05.2009
(73) Patentinhaber: Reinke, Peter, 8004 Zürich (CH)
(72) Erfinder: Reinke, Peter, 8004 Zürich (CH)
(74) Vertreter: Beier, Ralph
(86) Internationale Anmeldenummer: PCT/EP2007/007110
(87) Internationale Veröffentlichungsnummer: WO 2008/028554

(56) Entgegenhaltungen:
- CA-A1- 2 086 843
- DE-A1- 19 531 502
- DE-U1- 20 209 575
- DE-U1- 29 509 763
- DE-U1- 29 512 937

## Beschreibung

Die Erfindung betrifft ein Stativ"gemäß dem Hauptanspruch, insbesondere für ein Stehpult oder einen Beistelltisch.

Zur stabilen Aufstellung von Fotoapparaten sind Fotostative mit drei Stützbeinen bekannt, die an einem Stativkopf klappbar gelagert sind und mit ihren freien Enden eine stabile Mehrpunktauflage bilden, wobei der Stativkopf eine Halterung zur Anbringung eines Fotoapparates aufweist. Darüber hinaus sind derartige Fotostative bekannt, bei denen der Stativkopf eine teleskopierbare Stativsäule trägt, an deren Oberseite ein Fotoapparat angebracht werden kann.

Ein anderer Typ eines Stativs ist beispielsweise aus DE 195 31 502 A1 bekannt. Das aus dieser Druckschrift bekannte Stativ weist eine Stativsäule auf, die an ihrem oberen Ende den Stativkopf trägt und mit ihrem unteren Ende auf dem Boden steht. Weiterhin weist dieses Stativ zwei Stützbeine auf, die mittels eines arretierbaren Drehgelenks klappbar mit der Stativsäule verbunden sind, so dass die freien Enden der Stützbeine zusammen mit dem unteren Ende der Stativsäule eine Mehrpunktauflage bilden. Das Drehgelenk ist hierbei am unteren Ende der Stativsäule bodennah angebracht, so dass die Stützbeine nach oben zusammengeklappt werden können, um das Stativ platzsparend zu lagern. Darüber hinaus kann die Neigung der Stativsäule und damit auch des Stativkopfs eingestellt werden, indem der Winkel zwischen den Stützbeinen und der Stativsäule verändert wird. Nachteilig an dem vorstehend beschriebenen bekannten Stativ ist unter anderem der relativ hohe Massenschwerpunkt, was sich negativ auf das Standverhalten auswirkt.

Aus DE 295 12 937 U1 ist ein weiteres Stativ bekannt, bei dem die Stützbeine einen festen Winkel zu der Stativsäule aufweisen und mittels eines Schubgelenks entlang der Stativsäule verschoben werden können. Die Neigung der Stativsäule lässt sich hierbei also verändern, indem das Schubgelenk mit den Stützbeinen entlang der Stativsäule verschoben wird. Auch dieses Stativ weist jedoch einen relativ hohen Massenschwerpunkt auf, was sich negativ auf das Standverhalten auswirkt.

Weiterhin ist aus CA 2 086 843 A1 ein Stativ bekannt, das jedoch kein Gegengewicht trägt und deshalb ebenfalls unbefriedigend ist.

Schließlich ist zum Stand der Technik noch hinzuweisen auf DE 202 09 575 U1 und DE 295 09 763 U1.

Der Erfindung liegt deshalb die Aufgabe zugrunde, das vorstehend beschriebene bekannte Stativ entsprechend zu verbessern.

Diese Aufgabe wird durch ein erfindungsgemäßes Stativ gemäß Anspruch 1 gelöst.

Die Erfindung umfasst die allgemeine technische Lehre, am unteren Ende der Stativsäule ein Gegengewicht anzubringen, um das Standverhalten des Stativs zu verbessern. Vorzugsweise liegt der Massenschwerpunkt des Stativs dadurch unterhalb des Gelenks für die Stützbeine. Das Gegengewicht am unteren Ende der Stativsäule kann beispielsweise eine Masse von mindestens 4 kg, 6 kg, 8 kg oder mindestens 10 kg aufweisen. Die Erfindung ist jedoch hinsichtlich der Masse des Gegengewichts nicht auf die vorstehend genannten Massenwerte beschränkt, sondern auch mit anderen Gegengewichtsmassen realisierbar.

Darüber hinaus liegt der Massenschwerpunkt des Stativs in dem bevorzugten Ausführungsbeispiel oberhalb der Standfläche, damit das Stativ nicht umkippt.

In einer Variante der Erfindung ist das Gelenk für die Stützbeine ein Drehgelenk, so dass die Stützbeine relativ zu der Stativsäule geschwenkt werden können, um die Neigung der Stativsäule einzustellen.

In einer anderen Variante der Erfindung sind die Stützbeine dagegen mit einem Schubgelenk an der Stativsäule angelenkt. Hierbei weisen die Stützbeine also einen festen Winkel relativ zu der Stativsäule auf und können mit dem Schubgelenk entlang der Stativsäule verschoben werden, um die Neigung der Stativsäule einzustellen.

Vorzugsweise ist das vorstehend erwähnte Drehgelenk für die Stützbeine nicht bodennah in der Nähe des Aufstandspunkts der Stativsäule angeordnet, sondern im Mittelbereich der Stativsäule. Dies bietet den Vorteil, dass die Stützbeine im Wesentlichen nur auf Druck belastet werden und nicht auf Biegung, was eine größere mechanische Belastbarkeit ermöglicht bzw. einen geringeren Materialeinsatz zur Erzielung der gewünschten Belastbarkeit erlaubt. Der im Rahmen der Erfindung verwendete Begriff eines Mittelbereichs der Stativsäule ist allgemein zu verstehen und dient nur zur Abgrenzung gegenüber dem vorstehend beschriebenen bekannten Stativ gemäß DE 195 31 502 A1. Vorzugsweise ist das Drehgelenk für die Stützbeine jedoch im mittleren Drittel der Stativsäule angeordnet.

In einer Variante der Erfindung erfolgt die Abstützung der Stativsäule durch mehrere Stützbeine, beispielsweise durch zwei Stützbeine. Die freien Enden der Stützbeine bilden hierbei zusammen mit dem unteren Ende der Stativsäule eine Mehrpunktauflage und verhindern somit ein seitliches Umkippen des Stativs.

In einer anderen Variante der Erfindung erfolgt die Abstützung der Stativsäule dagegen durch ein einziges Stützbein, das Stützbein weist hierbei eine Aufstandsfläche mit einer ausreichenden seitlichen Erstreckung auf, um ein seitliches Umkippen des Stativs zu verhindern. Im Folgenden wird die Erfindung jedoch zur Vereinfachung mit mehreren Stützbeinen beschrieben.

Weiterhin weist das erfindungsgemäße Stativ vorzugsweise eine lösbare Beinarretierung auf, welche die Stützbeine in einer bestimmten Stellung relativ zu der Stativsäule arretiert.

In einer Variante der Erfindung ist diese Beinarretierung in das Drehgelenk der Stützbeine integriert, so dass die Stützbeine zwischen dem Drehgelenk und dem Boden verbindungsfrei sind, d.h. keine weiteren Verstrebungen mit der Stativsäule aufweisen.

In einer anderen Variante der Erfindung weist die Beinarretierung für die Stützbeine dagegen zugfeste und/oder druckfeste Stützstreben auf, mit denen sich die Stützbeine an der Stativsäule abstützen, um die Arretierung zu bewirken. In dieser Variante der Erfindung kann die Beinarretierung ebenfalls verschiedene Winkelstellungen erlauben, indem die Stützstreben beispielsweise in entsprechende Rastaufnahmen an der Stativsäule eingehängt werden.

Vorzugsweise sind die Stützbeine an der Stativsäule vorbei durchschwenkbar, was eine platzsparende Konfiguration für eine Verwendung des Stativs als Stehtisch ermöglicht. Die Stützbeine können also vorzugsweise von einer Seite der Stativsäule auf die andere Seite der Stativsäule herüber geschwenkt werden.

Weiterhin weist der Stativkopf des erfindungsgemäßen Stativs vorzugsweise ein arretierbares weiteres Drehgelenk auf, an dem ein Halteelement für den zu haltenden Gegenstand neigbar angelenkt ist. Bei dem Halteelement handelt es sich vorzugsweise um ein Tablett oder eine Plattform, worauf beispielsweise Musiknoten, ein Redemanuskript oder ein Laptop bzw. Notebook liegen können. Die Erfindung ist jedoch hinsichtlich des Halteelements nicht auf ein Tablett beschränkt, sondern grundsätzlich auch mit anderen Halteelementen realisierbar, die von herkömmlichen Stativen bekannt sind.

In einem bevorzugten Ausführungsbeispiel der Erfindung sind die Stützbeine und/oder das Halteelement in eine Lagerungs- bzw. Transportstellung klappbar, in der die Stützbeine bzw. das Halteelement parallel zu der Stativsäule verlaufen. Dies bietet den Vorteil, dass das erfindungsgemäße Stativ in der Lagerungs- bzw. Transportstellung nur einen geringen Platzbedarf hat.

Weiterhin ist vorzugsweise vorgesehen, dass die Stützbeine von ihrer Drehachse bis zum Boden eine größere Länge aufweisen als die Stativsäule von der Drehachse der Stützbeine bis zum Boden. Dies hat zur Folge, dass die Stativbeine im angeklappten Zustand mit ihren freien Enden über das untere Ende der Stativsäule hinausragen und dadurch stabile Auflagepunkte bilden. Dies ist insbesondere dann sinnvoll, wenn - wie noch detailliert beschrieben wird - am unteren Ende der Stativsäule Rollen angebracht sind, da die über die Rollen hinausragenden freien Enden der Stützbeine dann verhindern, dass das Stativ wegrollt.

Ferner ist zu erwähnen, dass die beiden Drehgelenke für die Stützbeine und das Halteelement vorzugsweise parallele Drehachsen aufweisen, die vorzugsweise rechtwinklig zu der Stativsäule verlaufen.

Darüber hinaus weist das Drehgelenk für das Halteelement und/oder das Drehgelenk für die Stützbeine vorzugsweise eine Winkelrasterung auf, die eine Arretierung in bestimmten Rastwinkeln bewirkt. Die Arretierung des Halteelements bzw. der Stützbeine erfolgt also vorzugsweise nicht in kontinuierlich wählbaren Arretierungswinkeln, sondern in den Rastwinkeln, die durch die Winkelrasterung vorgegeben sind.

Hierbei sind die Winkelrasterungen der beiden Drehgelenke für das Halteelement bzw. die Stützbeine vorzugsweise so aneinander angepasst, dass jedem Rastwinkel des Drehgelenks für die Stützbeine ein Rastwinkel des Drehgelenks für das Halteelement zugeordnet ist, in dem das Halteelement (z.B. ein Tablett) einen vorgegebenen, insbesondere waagerechten, Neigungswinkel aufweist.

Anstelle einer Winkelrasterung besteht jedoch im Rahmen der Erfindung auch die Möglichkeit, dass das Drehgelenk für das Halteelement bzw. die Stützbeine eine kontinuierliche, stufenlose Winkelverstellung ermöglicht.

Ferner besteht im Rahmen der Erfindung die Möglichkeit einer mechanischen Kopplung der beiden Drehgelenke für das Haltelement bzw. die Stützbeine. Die Kopplung bewirkt hierbei, dass eine Winkelverstellung der Stützbeine eine entsprechende Winkelverstellung des Haltelementes bewirkt, wobei die Kopplung eine Winkelübersetzung bewirken kann. Die Winkelübersetzung hat zur Folge, dass eine bestimmte Winkelverstellung α zu einer vorgegebenen Winkelverstellung k·α mit einem Kopplungsfaktor k führt, wobei der Kopplungsfaktor k durch die Kopplung mechanisch vorgegeben ist. Vorzugsweise wird der Kopplungsfaktor hierbei konstruktiv so festgelegt, dass das Halteelement unabhängig von der Lage der Stützbeine stets eine waagerechte Lage einnimmt.

Darüber hinaus ist zu erwähnen, dass das Drehgelenk für das Halteelement und/oder das Drehgelenk für die Stützbeine vorzugsweise nur einen einzigen Freiheitsgrad aufweist und somit lediglich eine Drehung bzw. ein Klappen erlaubt. Dies ermöglicht vorteilhaft eine einfache und stabile Konstruktion der Drehgelenke.

Es ist jedoch alternativ möglich, dass das Drehgelenk für das Halteelement und/oder das Drehgelenk für die Stützbeine als Kugelgelenk ausgebildet ist, das mehrere Freiheitsgrade aufweist.

Ferner ist vorzugsweise ein Bedienelement vorgesehen, das eine manuelle Arretierung bzw. ein Lösen der Arretierung des Drehgelenks für das Halteelement und/oder des Drehgelenks für die Stützbeine ermöglicht, wobei das Bedienelement beispielsweise an dem Halteelement angebracht ist, was eine bequeme Bedienung ermöglicht. Beispielsweise kann das Bedienelement die Arretierung über Bowdenzüge bewirken.

Es wurde bereits vorstehend kurz erwähnt, dass die Stativsäule an ihrem unteren Ende eine Rolle aufweisen kann, was die Handhabung des erfindungsgemäßen Stativs erleichtert, da das Stativ beim Transport gerollt werden kann. Die Rolle ist hierbei vorzugsweise um eine Drehachse drehbar, die rechtwinklig zu der Stativsäule und vorzugsweise parallel zu der Drehachse des Halteelements und/oder der Stützbeine verläuft. Vorzugsweise ist beiderseits der Stativsäule jeweils eine Rolle angebracht, so dass die beiden Rollen zusammen mit den beiden Stützbeinen eine stabile 4-Punkt-Auflage bilden.

Weiterhin wird das bereits vorstehend erwähnte Gegengewicht vorzugsweise durch die Rolle gebildet, die zur Erreichung eines hohen Gewichts beispielsweise aus Gusseisen bestehen kann.

Ferner ist zu erwähnen, dass die Stützbeine und/oder die Stativsäule bei dem erfindungsgemäßen Stativ vorzugsweise eine feste, nicht teleskopierbare Länge aufweisen. Die Erfindung ist jedoch nicht auf Stative beschränkt, bei denen die Stützbeine bzw. die Stativsäule eine feste Länge aufweisen, sondern auch mit herkömmlichen teleskopierbaren Stützbeinen bzw. Stativsäulen realisierbar.

Ferner ist die Länge der Stativsäule von dem Drehgelenk für die Stützbeine bis zu dem Stativkopf vorzugsweise größer als die Länge der Stativsäule von dem Drehgelenk für die Stützbeine bis zum Boden.

Zu erwähnen ist ferner, dass das Drehgelenk für das Halteelement (z.B. ein Tablett) und/oder das Drehgelenk für die Stützbeine vorzugsweise einen arretierbaren Winkelbereich von mindestens 90°, 135°, 180°, 235° oder sogar 270° aufweist, um vielfältige Konfigurationen zu ermöglichen. Das Drehgelenk für die Stützbeine kann sogar einen unbegrenzten Winkelbereich aufweisen, so dass die Stützbeine frei in die gewünschte Winkelstellung gedreht werden können.

Ferner ist noch zu erwähnen, dass der im Rahmen der Erfindung verwendete Begriff einer Stativsäule allgemein zu verstehen ist und nicht auf gerade, langgestreckte Rohre beschränkt ist. Vielmehr kann die Stativsäule beispielsweise auch aus einer Rahmenkonstruktion oder einer Platte bestehen. Ferner besteht die Möglichkeit, dass die Stativsäule gerade oder gekrümmt ist oder Knickstellen aufweist. Darüber hinaus kann die Stativsäule wahlweise ein Hohlprofil aufweisen oder massiv sein.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:

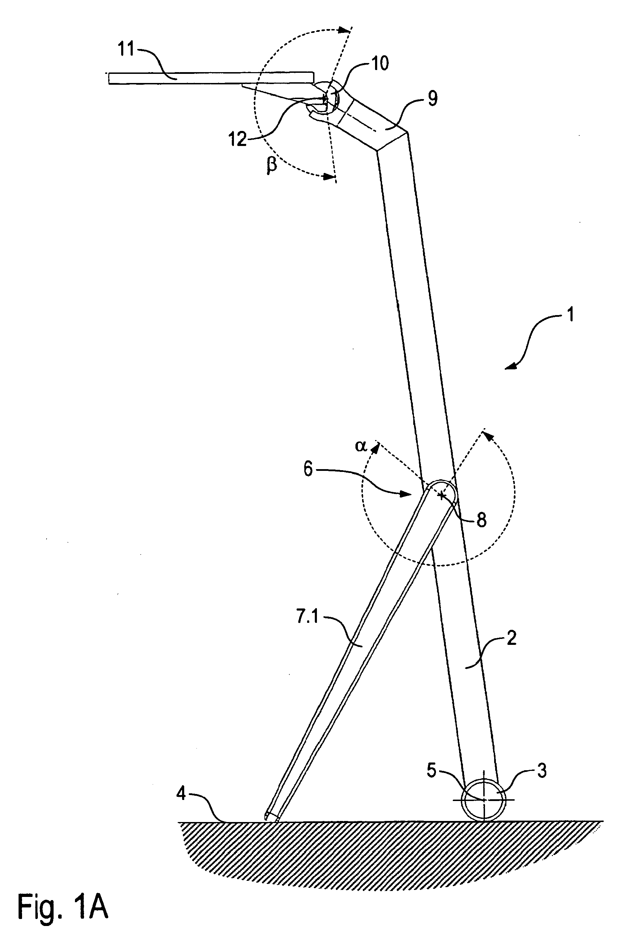

- Figur 1A: eine Seitenansicht eines erfindungsgemäßen Stativs in einer Konfiguration als Stehpult,

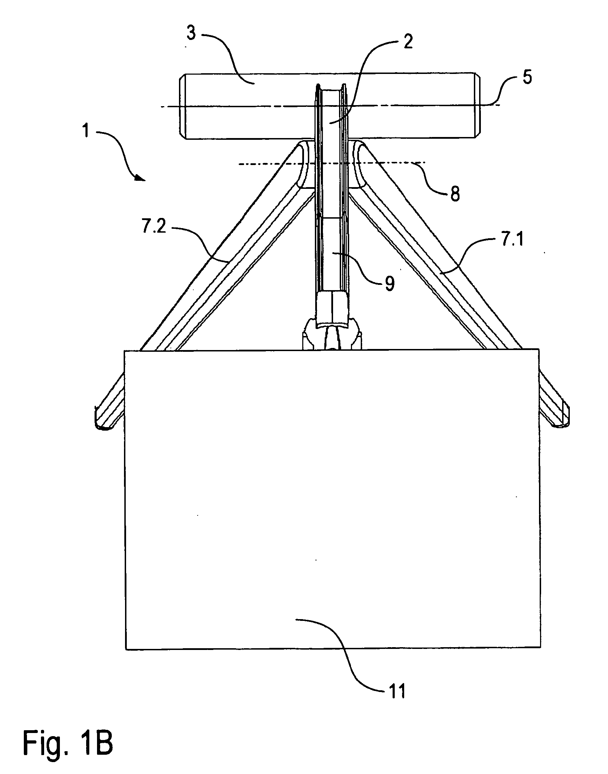

- Figur 1B: eine Aufsichtsdarstellung des Stativs gemäß Figur 1A,
- Figur 2A: eine Seitenansicht einer anderen Konfiguration desselben Stativs, wobei diese Konfiguration ebenfalls als Stehpult dient,
- Figur 2B: eine Aufsichtsdarstellung der Konfiguration gemäß Figur 2A,
- Figur 3A: eine Seitenansicht desselben Stativs in einer Konfiguration als Beistelltisch,
- Figur 3B: eine Aufsichtsdarstellung der Konfiguration gemäß Figur 3A,
- Figur 4A: eine Seitenansicht desselben Stativs in einer Transport- und Lagerstellung sowie
- Figur 4B: eine Aufsichtsdarstellung auf das Stativ gemäß Figur 4A.

Die Zeichnungen zeigen ein bevorzugtes Ausführungsbeispiel eines erfindungsgemäßen Stativs 1, das beispielsweise als Notebookständer eingesetzt werden kann und darüber hinaus vielfältige Einsatzmöglichkeiten beispielsweise als Notenständer oder Beistelltisch aufweist, wie noch detailliert beschrieben wird.

Das Stativ 1 weist eine langgestreckte Stativsäule 2 auf, die an ihrem unteren Ende eine drehbar gelagerte Rolle 3 trägt, mit der die Stativsäule 1 auf einem Boden 4 steht. Die Rolle 3 hat mehrere Funktionen, die im Folgenden beschrieben werden.

Zum einen ist die Rolle 3 um eine Drehachse 5 drehbar, die rechtwinklig zu der Stativsäule 2 verläuft, so dass das Stativ 1 auf der Rolle 3 weggerollt werden kann, was die Handhabung erleichtert.

Zum anderen dient die Rolle 3 als Gegengewicht zur Verbesserung der Standsicherheit und weist deshalb eine Masse von 8 kg auf. Der Massenschwerpunkt des Stativs 1 liegt dadurch unterhalb des Drehgelenks 6.

Darüber hinaus weist die Rolle 3 eine erhebliche seitliche Erstreckung auf, was zu einer guten Standsicherheit des Stativs 1 beiträgt, da die Rolle 3 einem seitlichen Umkippen des Stativs 1 entgegen wirkt.

Im Mittelbereich der Stativsäule 2 befindet sich ein Drehgelenk 6 für zwei Stützbeine 7.1, 7.2, wobei die Stützbeine 7.1, 7.2 um eine Drehachse 8 relativ zu der Stativsäule 2 dreh- bzw. klappbar sind. Die Drehachse 8 der Stützbeine 7.1, 7.2 verläuft hierbei ebenfalls rechtwinklig zu der Stativsäule 2 und parallel zu der Drehachse 5 der Rolle 3.

Mit ihren freien Enden stützen sich die beiden Stützbeine 7.1, 7.2 auf dem Boden 4 ab, so dass die beiden Stützbeine 7.1, 7.2 zusammen mit den seitlichen Enden der Rolle 5 eine standsichere 4-Punkt-Auflage bilden.

Das Drehgelenk 6 ermöglicht hierbei für die beiden Stützbeine 7.1, 7.2 einen stufenlosen Schwenkbereich α von mehr als 270°, wie in der Zeichnung gestrichelt dargestellt ist. Dieser relativ große Schwenkbereich der Stützbeine 7.1, 7.2 ermöglicht vorteilhaft vielfältige Konfigurationen des Stativs 1, wie noch detailliert beschrieben wird.

An ihrem oberen Ende trägt die Stativsäule 2 einen Stativkopf 9 mit einem weiteren Drehgelenk 10 zur neigbaren Halterung eines Tabletts 11, auf dem beispielsweise ein Notebook oder ein Redemanuskript abgelegt werden kann. Das Tablett 11 ist hierbei um eine Drehachse 12 drehbar, wobei die Drehachse 12 rechtwinklig zu der Längsachse der Stativsäule 2 und parallel zu den beiden Drehachsen 5, 8 ausgerichtet ist.

Hierbei ermöglicht das Drehgelenk 10 einen stufenlosen, freien Schwenkbereich β von mehr als 180°, wie in der Zeichnung gestrichelt dargestellt ist. Dieser relativ große Schwenkbereich des Tabletts 11 ermöglicht vorteilhaft vielfältige Konfigurationen für verschiedene Einsatzzwecke, wie noch detailliert beschrieben wird.

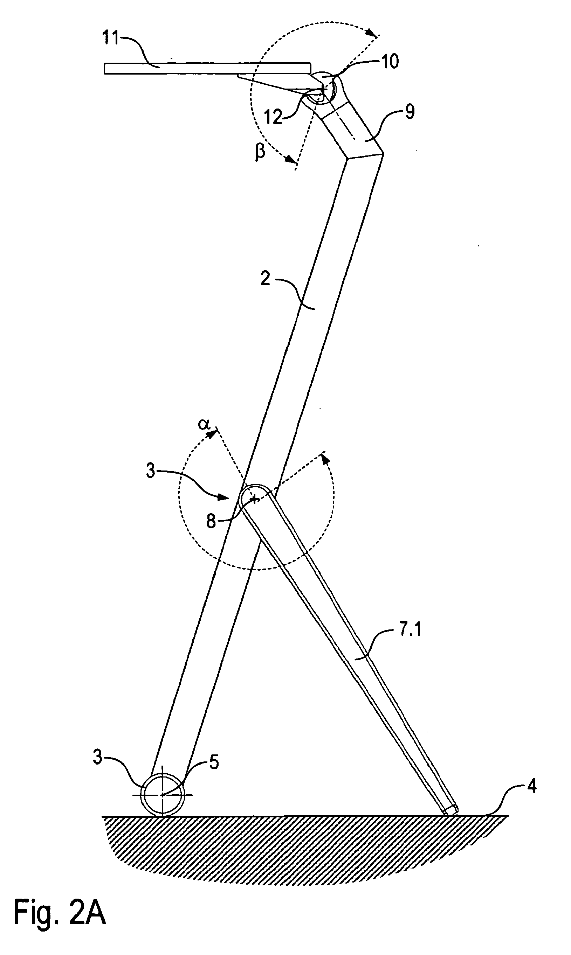

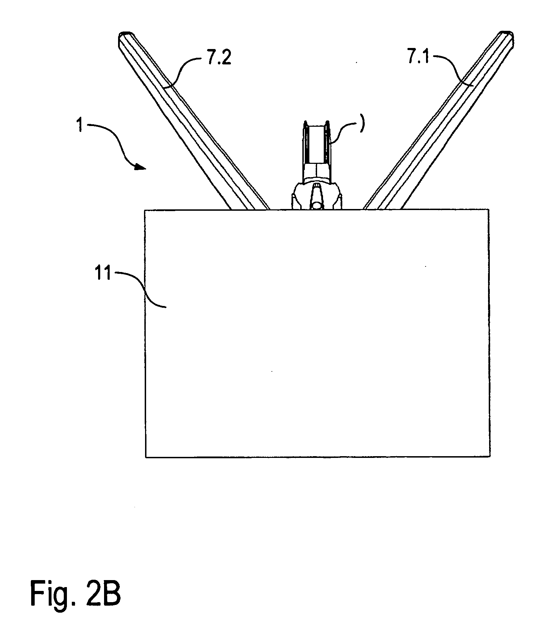

Die Figuren 2a und 2b zeigen das selbe Stativ 1 in einer anderen Konfiguration, die ebenfalls als Stehpult dient. Zur Vermeidung von Wiederholungen wird deshalb auf die vorstehende Beschreibung verwiesen. Eine Besonderheit dieses Ausführungsbeispiels besteht darin, dass die beiden Stützbeine 7.1, 7.2 auf die Seite der Stativsäule 2 geklappt sind, die dem Tablett 11 gegenüberliegen.

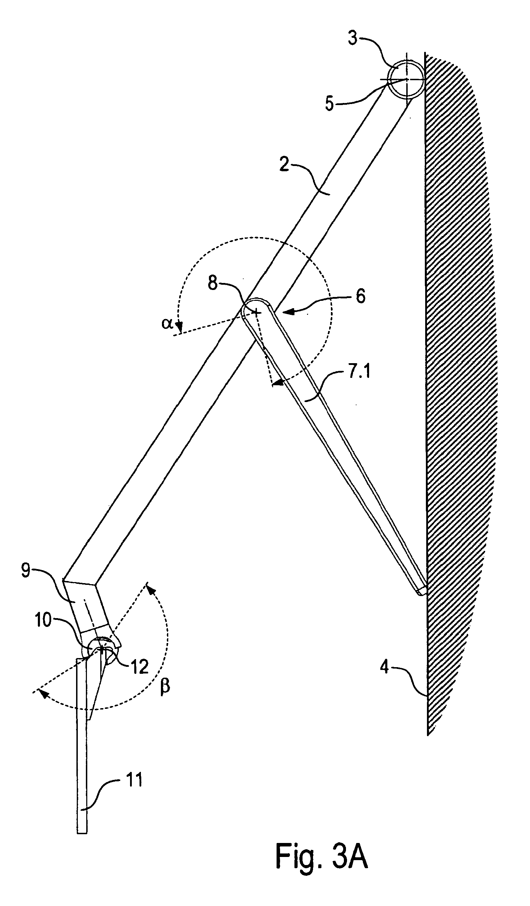

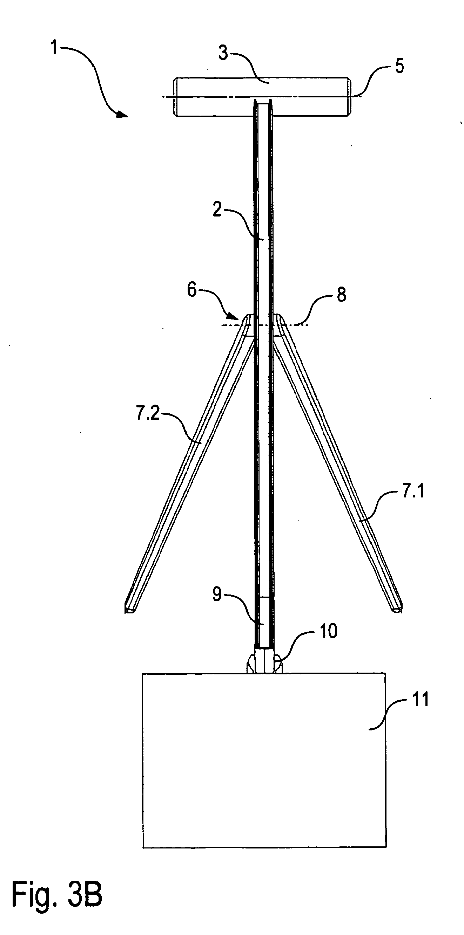

Die Figuren 3a und 3b zeigen eine weitere mögliche Konfiguration des erfindungsgemäßen Stativs 1, die als Beistelltisch dient. Zur Vermeidung von Wiederholungen wird deshalb wiederum auf die vorstehende Beschreibung verwiesen.

Eine Besonderheit dieses Ausführungsbeispiels besteht darin, dass die beiden Stützbeine 7.1, 7.2 weit in Richtung des Stativkopfes 9 geklappt sind und mit dem freien unteren Ende der Stativsäule 2 unterhalb des Drehgelenks 6 einen stumpfen Winkel von ungefähr 115° einstießen.

Entsprechend ist das Tablett 11 ebenfalls weiter nach oben geklappt und weist bezüglich des Bodens 4 eine horizontale Neigung auf, so dass auf dem Tablett 11 Gegenstände abgestellt werden könnten.

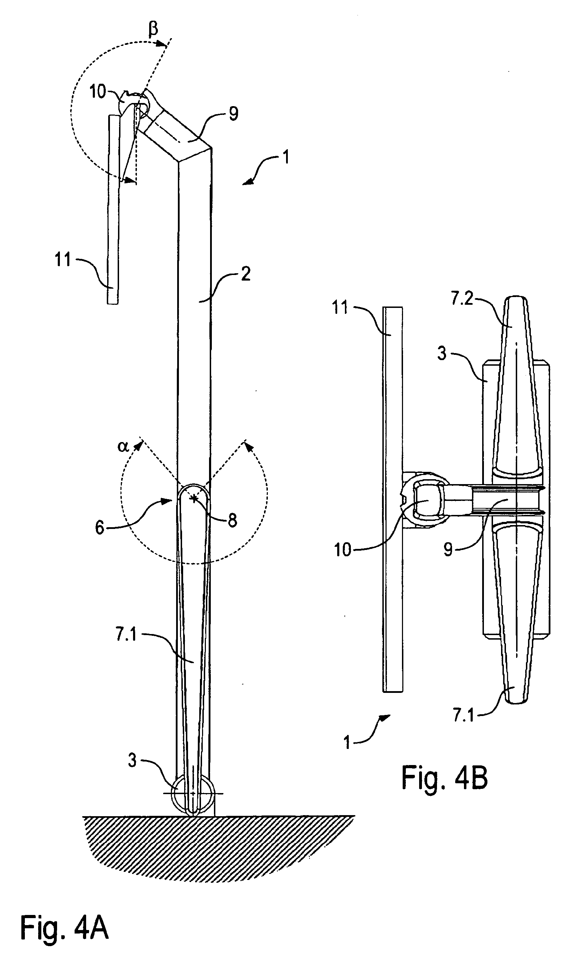

Die Figuren 4A und 4B zeigen schließlich eine Transport- und Lagerstellung des Stativs 1, in der die Stativbeine 7.1, 7.2 so angeklappt sind, dass die Stativbeine 7.1, 7.2 parallel zu der Stativsäule 2 verlaufen. In dieser Transport- und Lagerstellung ragen die freien Enden der Stützbeine 7.1, 7.2 über die Rolle 3 am unteren Ende der Stativsäule 2 hinaus, so dass die freien Enden der Stützbeine 7.1, 7.2 ein Wegrollen des Stativs 1 verhindern.

Darüber hinaus ist das Tablett 11 ebenfalls so weit nach unten geklappt, dass das Tablett 11 parallel zu der Stativsäule 2 verläuft. In der Transport- und Lagerstellung weist das Stativ 1 also vorteilhaft einen geringen Platzbedarf auf.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Stativ
- 2: Stativsäule
- 3: Rolle
- 4: Boden
- 5: Drechachse der Rolle
- 6: Drehgelenk
- 7.1, 7.2: Stützbeine
- 8: Drehachse
- 9: Stativkopf
- 10: Drehgelenk
- 11: Tablett
- 12: Drehachse

## Patentansprüche

1. Stativ (1) mit
a) einem Stativkopf (9) zur Halterung eines Gegenstands,
b) einer den Stativkopf (9) tragenden und mit ihrem unteren Ende auf dem Boden (4) stehenden Stativsäule (2),
c) mindestens einem Stützbein (7.1, 7.2), das mit seinem freien Ende auf dem Boden steht und die Stativsäule (2) abstützt,
d) einem ersten Gelenk (6), das die Stützbeine (7.1, 7.2) beweglich mit der Stativsäule (2) verbindet, so dass die Neigung der Stativsäule (2) durch eine Verstellung des ersten Gelenks (6) einstellbar ist, sowie mit
e) einer lösbaren Beinarretierung, welche das Stützbein (7.1, 7.2) in einer bestimmten Stellung relativ zu der Stativsäule (2) arretiert,
**dadurch gekennzeichnet, dass**
f) am unteren Ende der Stativsäule (2) ein Gegengewicht (3) angebracht ist.

2. Stativ (1) nach Anspruch 1,
**dadurch gekennzeichnet,**
a) **dass** der Massenschwerpunkt des Stativs (1) unterhalb des ersten Gelenks (6) liegt, und/oder
b) **dass** das erste Gelenk (6) ein Drehgelenk ist, welches das Stützbein (7.1, 7.2) klappbar mit der Stativsäule (2) verbindet.

3. Stativ (1) nach einem der vorhergehenden Ansprüche,
**dadurch gekennzeichnet,**
a) **dass** ein einziges Stützbein vorgesehen ist, das eine Aufstandsfläche mit einer seitlichen Erstreckung aufweist, oder
b) **dass** mehrere, insbesondere zwei Stützbeine (7.1, 7.2) die Stativsäule (2) abstützen.

4. Stativ (1) nach einem der vorhergehenden Ansprüche,
**dadurch gekennzeichnet,**
a) **dass** die Beinarretierung in das erste Gelenk (6) integriert ist, so dass die Stützbeine (7.1, 7.2) zwischen dem ersten Gelenk (6) und dem Boden (4) verbindungsfrei sind, oder
b) **dass** die Beinarretierung mindestens eine zugfeste und/oder druckfeste Stützstrebe aufweist, mit der sich das Stützbein (7.1, 7.2) an der Stativsäule (2) abstützt.

5. Stativ (1) nach einem der vorhergehenden Ansprüche, **dadurch gekennzeichnet, dass** das Stützbein (7.1, 7.2) an der Stativsäule (2) vorbei durchschwenkbar sind.

6. Stativ (1) nach einem der vorhergehenden Ansprüche,
**dadurch gekennzeichnet,**
a) **dass** der Stativkopf (9) ein arretierbares zweites Drehgelenk (10) aufweist, an dem ein Haltelement (11) für den zu haltenden Gegenstand neigbar angelenkt ist, und/oder
b) **dass** das Stützbein (7.1, 7.2) und/oder das Halteelement (11) in eine Lagerungsstellung parallel zu der Stativsäule (2) klappbar sind, und/oder
c) **dass** das Stützbein (7.1, 7.2) von der ersten Drehachse (8) bis zum Boden (4) eine größere Länge aufweisen als die Stativsäule (2) von der ersten Drehachse (8) bis zum Boden (4), und/oder
d) **dass** die beiden Drehgelenke (6, 10) für das Stützbein (7.1, 7.2) und das Halteelement (11) parallele Drehachsen (8, 12) aufweisen.

7. Stativ (1) nach einem der vorhergehenden Ansprüche, **dadurch gekennzeichnet, dass** das erste Drehgelenk (6) und/oder das zweite Drehgelenk (10) eine Winkelrasterung aufweist, die eine Arretierung in bestimmten Rastwinkeln bewirkt.

8. Stativ nach einem der Ansprüche 1 bis 6, **dadurch gekennzeichnet, dass** das erste Drehgelenk (6) und/oder das zweite Drehgelenk (10) stufenlos verstellbar und/oder arretierbar sind.

9. Stativ (1) nach einem der vorhergehenden Ansprüche,
**dadurch gekennzeichnet,**
a) **dass** das erste Drehgelenk (6) und/oder das zweite Drehgelenk (10) nur einen einzigen Freiheitsgrad aufweist, und/oder
b) **dass** erste Drehgelenk (6) und/oder das zweite Drehgelenk (10) als Kugelgelenk ausgebildet ist.

10. Stativ (1) nach einem der Ansprüche 6 bis 9, **dadurch gekennzeichnet, dass** das Halteelement (11) ein Tablett ist.

11. Stativ (1) nach einem der vorhergehenden Ansprüche, **gekennzeichnet durch** ein Bedienelement zur manuellen Arretierung bzw. zum manuellen Lösen der Arretierung des ersten Drehgelenks (6) und/oder des zweiten Drehgelenks (10).

12. Stativ (1) nach Anspruch 11, **dadurch gekennzeichnet, dass** das Bedienelement an dem Haltelement (11) angebracht ist.

13. Stativ (1) nach einem der vorhergehenden Ansprüche,
**dadurch gekennzeichnet,**
a) **dass** die Stativsäule (2) an ihrem unteren Ende mindestens eine Rolle (3) aufweist, und/oder
b) **dass** die Drehachse (8) des Stützbeins (7.1, 7.2) und/oder die Drehachse (12) des Haltelements (11) im Wesentlichen rechtwinklig zu der Stativsäule (2) verläuft, und/oder
c) **dass** das Stützbein (7.1, 7.2) und/oder die Stativsäule (2) eine feste, nicht telekopierbare Länge aufweisen, und/oder
d) **dass** die Länge der Stativsäule (2) von dem ersten Drehgelenk (6) bis zu dem Stativkopf (9) größer ist als die Länge der Stativsäule (2) von dem ersten Drehgelenk (6) bis zum Boden (4), und/oder
e) **dass** das erste Drehgelenk und/oder das zweite Drehgelenk einen arretierbaren Winkelbereich (α, β) von mindestens 90°, 135°, 180°, 235° oder mindestens 270° aufweist, und/oder
f) **dass** das erste Gelenk ein Schubgelenk ist, das zusammen mit dem Stützbein entlang der Stativsäule verschiebbar ist, wobei das Stützbein eine feste Winkelstellung relativ zu der Stativsäule aufweist.

14. Möbel mit einem Stativ (1) nach einem der vorhergehenden Ansprüche.

15. Möbel nach Anspruch 14, **gekennzeichnet durch** eine Ausbildung als Stehpult oder Beistelltisch.

## Claims

1. A stand (1) having
a) a stand head (9) for holding an object,
b) a stand column (2) bearing the stand head (9) and standing with its lower end on the floor (4),
c) at least one supporting leg (7.1, 7.2), which stands with its free end on the floor and supports the stand column (2),
d) a first joint (6), which connects the supporting legs (7.1, 7.2) movably to the stand column (2), such that the inclination of the stand column (2) may be adjusted by adjustment of the first joint (6), and having
e) an unlockable leg lock, which locks the supporting leg (7.1, 7.2) in a specific position relative to the stand column (2),
**characterised in that**
f) a counterweight (3) is fitted at the lower end of the stand column (2).

2. The stand (1) according to claim 1,
**characterised in that**
a) the centre of gravity of the stand (1) is located below the first joint (6), and/or
b) the first joint (6) is a revolute joint, which connects the supporting leg (7.1, 7.2) foldably to the stand column (2).

3. The stand (1) according to any one of the preceding claims, **characterised in that**
a) a single supporting leg is provided, which comprises a laterally extending contact area, or
b) a plurality of, in particular two, supporting legs (7.1, 7.2) support the stand column (2).

4. The stand (1) according to any one of the preceding claims, **characterised in that**
a) the leg lock is incorporated into the first joint (6), such that the supporting legs (7.1, 7.2) are without connection between the first joint (6) and the floor (4), or
b) the leg lock comprises at least one supporting strut resistant to tensile and/or compressive loads, with which the supporting leg (7.1, 7.2) rests against the stand column (2).

5. The stand (1) according to any one of the preceding claims, **characterised in that** the supporting leg (7.1, 7.2) may be swivelled back past the stand column (2).

6. The stand (1) according to any one of the preceding claims, **characterised in that**
a) the stand head (9) comprises a lockable second revolute joint (10), to which a holding element (11) for the object to be held in place is hinged inclinably, and/or
b) the supporting leg (7.1, 7.2) and/or the holding element (11) may be folded into a storage position parallel to the stand column (2), and/or
c) the supporting leg (7.1, 7.2) has a greater length from the first axis of rotation (8) to the floor (4) than the stand column (2) has from the first axis of rotation (8) to the floor (4), and/or
d) the two revolute joints (6, 10) for the supporting leg (7.1, 7.2) and the holding element (11) comprise parallel axes of rotation (8, 12).

7. The stand (1) according to any one of the preceding claims, **characterised in that** the first revolute joint (6) and/or the second revolute joint (10) comprise(s) an angular indexing means, which brings about locking at specific index angles.

8. The stand according to any one of claims 1 to 6, **characterised in that** the first revolute joint (6) and/or the second revolute joint (10) is/are infinitely variably adjustable and/or lockable.

9. The stand (1) according to any one of the preceding claims, **characterised in that**
a) the first revolute joint (6) and/or the second revolute joint (10) has/have just one degree of freedom, and/or
b) the first revolute joint (6) and/or the second revolute joint (10) take(s) the form of a ball-and-socket joint.

10. The stand (1) according to any one of claims 6 to 9, **characterised in that** the holding element (11) is a tray.

11. The stand (1) according to any one of the preceding claims, **characterised by** an operating element for manual locking and for manual unlocking of the first revolute joint (6) and/or of the second revolute joint (10).

12. The stand (1) according to claim 11, **characterised in that** the operating element is mounted on the holding element (11).

13. The stand (1) according to any one of the preceding claims, **characterized in that**
a) the stand column (2) comprises at least one roller (3) at its lower end, and/or
b) the axis of rotation (8) of the supporting leg (7.1, 7.2) and/or the axis of rotation (12) of the holding element (11) extend(s) substantially at right angles to the stand column (2), and/or
c) the supporting leg (7.1, 7.2) and/or the stand column (2) has/have a fixed, non-telescopic length, and/or
d) the length of the stand column (2) from the first revolute joint (6) to the stand head (9) is greater than the length of the stand column (2) from the first revolute joint (6) to the floor (4), and/or
e) the first revolute joint and/or the second revolute joint has/have a lockable angular range (α, β) of at least 90°, 135°, 180°, 235° or at least 270°, and/or
f) the first joint is a prismatic joint, which is displaceable together with the supporting leg along the stand column, the supporting leg exhibiting a fixed angular position relative to the stand column.

14. An item of furniture having a stand (1) according to any one of the preceding claims.

15. An item of furniture according to claim 14, **characterised in that** it takes the form of a standing desk or occasional table.

## Revendications

1. Statif (1) avec
a) une tête de statif (9) pour le maintien d'un objet,
b) une colonne de statif (2) supportant la tête de statif (9) et se dressant sur le sol (4) par son extrémité inférieure,
c) au moins une jambe d'appui (7.1, 7.2), reposant sur le sol par son extrémité libre et soutenant la colonne de statif (2),
d) une première articulation (6) raccordant de manière mobile les jambes d'appui (7.1, 7.2) à la colonne de statif (2), de sorte que l'inclinaison de la colonne de statif (2) est réglable par déplacement de la première articulation (6), et avec
e) un blocage de jambe desserrable, lequel fixe la jambe d'appui (7.1, 7.2) dans une position définie par rapport à la colonne de statif (2), **caractérisé**
f) **en ce qu'**un contrepoids (3) est appliqué à l'extrémité inférieure de la colonne de statif (2).

2. Statif (1) selon la revendication 1,
**caractérisé**
a) **en ce que** le centre de gravité du statif (1) est situé en dessous de la première articulation (6), et/ou
b) **en ce que** la première articulation (6) est un pivot raccordant la jambe d'appui (7.1, 7.2) à la colonne de statif (2) contre laquelle elle est rabattable.

3. Statif (1) selon l'une des revendications précédentes, **caractérisé**
a) **en ce qu'**une seule jambe d'appui est prévue, laquelle est pourvue d'une surface de dressage avec une extension latérale, ou
b) **en ce que** plusieurs, en particulier deux jambes d'appuis (7.1, 7.2) soutiennent la colonne de statif (2).

4. Statif (1) selon l'une des revendications précédentes, **caractérisé**
a) **en ce que** le blocage de jambe est intégré à la première articulation (6), de sorte que les jambes d'appuis (7.1, 7.2) sont exemptes de raccords entre la première articulation (6) et le sol (4), ou
b) **en ce que** le blocage de jambe est pourvu d'au moins une entretoise d'appui résistante à la traction et/ou résistante à la pression, au moyen de laquelle la jambe d'appui (7.1, 7.2) s'appuie contre la colonne de statif (2).

5. Statif (1) selon l'une des revendications précédentes, **caractérisé en ce que** la jambe d'appui (7.1, 7.2) est pivotante de part et d'autre de la colonne de statif (2).

6. Statif (1) selon l'une des revendications précédentes, **caractérisé**
a) **en ce que** la tête de statif (9) est pourvue d'un deuxième pivot serrable (10), auquel est articulé un élément de maintien inclinable (11) pour l'objet à maintenir, et/ou
b) **en ce que** la jambe d'appui (7.1, 7.2) et/ou l'élément de maintien (11) sont rabattables dans une position de stockage parallèle à la colonne de statif (2), et/ou
c) **en ce que** la jambe d'appui (7.1, 7.2) présente entre le premier axe de pivotement (8) et le sol (4) une longueur supérieure à la colonne de statif (2) entre le premier axe de pivotement (8) et le sol (4).

7. Statif (1) selon l'une des revendications précédentes, **caractérisé en ce que** le premier pivot (6) et/ou le deuxième pivot (10) sont pourvus d'un verrouillage angulaire, provoquant un blocage dans certains angles d'enclenchement.

8. Statif selon l'une des revendications 1 à 6,
**caractérisé en ce que** le premier pivot (6) et/ou le deuxième pivot (10) sont réglables de manière continue et/ou blocables.

9. Statif (1) selon l'une des revendications précédentes, **caractérisé**
a) **en ce que** le premier pivot (6) et/ou le deuxième pivot (10) ne comportent qu'un seul degré de liberté, et/ou
b) **en ce que** le premier pivot (6) et/ou le deuxième pivot (10) sont réalisés comme rotules.

10. Statif (1) selon l'une des revendications 10 à 18, **caractérisé en ce que** l'élément de maintien (11) est une tablette.

11. Statif (1) selon l'une des revendications précédentes, **caractérisé par** un élément de commande pour le blocage manuel ou pour le desserrage manuel du blocage du premier pivot (6) et/ou du deuxième pivot (10).

12. Statif (1) selon la revendication 20, **caractérisé en ce que** l'élément de commande est appliqué sur l'élément de maintien (11).

13. Statif (1) selon l'une des revendications précédentes, **caractérisé**
a) **en ce que** la colonne de statif (2) est pourvue d'au moins une roulette (3) à son extrémité inférieure, et/ou
b) **en ce que** l'axe de pivotement (8) de la jambe d'appui (7.1, 7.2) et/ou l'axe de pivotement (12) de l'élément de maintien (11) s'étendent sensiblement perpendiculairement à la colonne de statif (2), et/ou
c) **en ce que** la jambe d'appui (7.1, 7.2) et/ou la colonne de statif (2) présentent une longueur fixe, non télescopique, et/ou
d) **en ce que** la longueur de la colonne de statif (2) entre le premier pivot (6) et la tête de statif (9) est supérieure à la longueur de la colonne de statif (2) entre le premier pivot (6) et le sol (4), et/ou
e) **en ce que** le premier pivot et/ou le deuxième pivot présentent une plage angulaire verrouillable (α, β) d'au moins 90°, 135°, 180°, 235° ou d'au moins 270°, et/ou
f) **en ce que** la première articulation est une articulation à coulisse déplaçable avec la jambe d'appui le long de la colonne de statif, la jambe d'appui présentant une position angulaire fixe par rapport à la colonne de statif.

14. Meuble avec un statif (1) selon l'une des revendications précédentes.

15. Meuble selon la revendication 31, **caractérisé par** une réalisation comme pupitre ou comme desserte.
